# EUROPEAN PATENT SPECIFICATION

(11) **EP 2 509 799 B1**
(45) Date of publication and mention of the grant of the patent: **19.02.2014**
(21) Application number: 10788393.6
(22) Date of filing: 03.12.2010
(51) Int. Cl.: B60B 15/02, B60B 19/00

(54) **RIMLESS WHEEL**
FELGENLOSES RAD
ROUE SANS JANTE

(30) Priority: 10.12.2009 GB 0921602
(43) Date of publication of application: 17.10.2012
(73) Proprietor: Albert Technology Limited, Richmond Hill, Braddan Isle of Man IM4 1JL (GB)
(72) Inventor: BURNS, Alan Robert, deceased (GB)
(74) Representative: McIlroy, Steven David
(86) International application number: PCT/GB2010/052016
(87) International publication number: WO 2011/070344

(56) References cited:
- EP-A1- 1 870 254
- BE-A1- 883 291
- FR-A1- 2 314 394
- FR-A1- 2 567 078
- US-A- 3 628 618

## Description

The present invention relates to a rimless wheel and particularly, but not exclusively, to a flexible bladed wheel for providing thrust to propel land-based, water-based or amphibious vehicles.

It is well known to adapt land-based vehicle wheels dependent on the type of terrain over which the vehicle is expected to travel. In particular, certain vehicle types used for industrial, agricultural, recreational and military purposes are commonly provided with bespoke tyre tread and/or wheel-and-track arrangements to facilitate the propelling of vehicles over given surface types ranging from firm, flat ground to rough, uneven or steeply inclined terrain.

The use of "paddle wheels" on water craft such as boats and ships as a means of providing thrust through the water is well established, albeit such wheels have now generally been superseded by alternative means of propulsion such as the screw propeller.

Furthermore, it is known to provide amphibious vehicles utilising, for example, hybrid wheels fitted with paddle blades for the dual purpose of propelling a vehicle both through water and over land.

However, the aforementioned wheel types suffer from numerous disadvantages. For example, they generally do not propel vehicles satisfactorily over a wide range of different surface types. In particular, wheels adapted for specific surface terrain types may require to be of specific dimensions, or require vehicles to be provided with complicated suspension and gearing arrangements. Furthermore, certain wheel types are vulnerable to punctures or prone to rapid wearing or mechanical damage. Many wheels used in water craft are simply inefficient in providing thrust, and are generally large, cumbersome and vulnerable to mechanical damage or corrosion.

It is known from EP1,870,254 (Macroswiss S.A.) - which is considered to be the closest known prior art - to provide wheels for small robot-type vehicles disclosing the features of the preamble of claim 1. Various other rimless wheel arrangements are disclosed in, for example, FR2,567,078 (Fruchaud), BE883,291 (Dedonder), FR2,314,394 (Bertin) and US3,628,618 (Cash).

However, there is a requirement for a wheel which exhibits enhanced traction and efficiency over a broad range of surface terrain types including, but not limited to, earth, mud, gravel, stones, sand, marsh, ice, snow etc, and/or through water; and which is durable and scalable to accommodate different vehicle sizes and types without the need to provide additional complicated or expensive suspension and gearing arrangements.

According to a first aspect of the present invention, there is provided a rimless vehicle wheel comprising:
(i) a hub configured for rotational attachment to a vehicle; and
(ii) a plurality of cantilevered blades spaced around the hub, each blade having an inner root extending from the hub, an outer tip, and first and second major blade surfaces extending between the root and tip;
wherein each blade has a stiffness allowing independent flexure between a first unloaded blade configuration and any number of second loaded blade configurations; and wherein a reinforcing web extends circumferentially between adjacent blades proximate the hub.

Optionally, when in the first unloaded blade configuration, each blade extends substantially radially from the hub, and the first and second major blade surfaces are substantially planar along their lengths between the root and tip.

Optionally, when in any of the second loaded blade configurations, at least part of the outer tip of each blade is moved out of radial alignment with its inner root, and the first and second major blade surfaces are curved under load between the root and tip.

Optionally, the length of each blade from root to tip is between 30% and 50% of the circumference of the hub measured at the blades' inner roots.

Optionally, the depth of each blade from front to back in the axial direction is between 40% and 60% of the length of each blade from root to tip.

Optionally, the width of each blade in the circumferential plane tapers towards its outer tip.

Optionally, the outer tip of each blade is truncated.

Optionally, each blade has a stiffness which facilitates both circumferential bending and lateral twisting relative to the first unloaded blade configuration.

Optionally, each blade has a stiffness and/or spacing of blades around the hub such that, when in a second loaded blade configuration, a major blade surface of one blade is capable of curving into contact with the opposing major blade surface of an adjacent blade.

Optionally, the stiffness and/or spacing of blades around the hub is such that, when in a second loaded blade configuration, one or more of the first and/or second major blade surfaces is capable of supporting the wheel on an underlying surface by facilitating a degree of relative rotation between the hub and outer tip.

Optionally, the stiffness of each blade is such that, when supporting a hub on a planar surface, a hub load of 2.5kN causes blade tips in contact with the surface to deflect circumferentially by at least 10% of the blade length from root to tip.

Optionally, each blade is provided with traction-enhancing means on its first and/or second major blade surface.

Optionally, the hub is provided with sixteen cantilevered blades.

Optionally, the hub and the cantilevered blades are moulded in one piece from an elastomeric material.

Optionally, the elastomeric material is a polyurethane plastics material.

Optionally, the hub is annular and defines a circular axial passage through the wheel within which is received a drive shaft.

According to a second aspect of the present invention, there is provided a passenger vehicle comprising at least one wheel according to the first aspect.

Optionally, the vehicle is a land-based vehicle.

Optionally, the vehicle is a water craft.

Optionally, the vehicle is an amphibious vehicle.

Embodiments of the present invention will now be described, by way of example only, with reference to the accompanying drawings, in which:
Fig. 1a is a schematic perspective view of a wheel with all blades in a non-deflected state;
Fig. 1b is a side elevation view of the wheel of Fig. 1a;
Fig. 1c is a view from above of the wheel of Fig. 1a;
Fig. 2a is a schematic perspective view of a wheel according to the present invention with all blades in a non-deflected state;
Fig. 2b is a side elevation view of the wheel of Fig. 2a;
Fig. 2c is a view from above of the wheel of Fig. 2a;
Fig. 3a is a schematic perspective view of a further alternative wheel with all blades in a non-deflected state;
Fig. 3b is a side elevation view of the wheel of Fig. 3a;
Fig. 3c is a view from above of the wheel of Fig. 3a;
Fig. 3d is a schematic perspective view of a yet further alternative wheel with all blades in a non-deflected state;
Fig. 3e is a schematic side elevation view of the alternative wheel of Fig. 3d;
Fig. 4a is a partial schematic perspective view of a wheel with several blades in a deflected state under a vertical load;
Fig. 4b is a schematic side elevation view of the wheel of Fig. 4a;
Fig. 4c is a view from below of the wheel of Fig. 4a;
Fig. 4d is a schematic perspective view similar to that of Fig. 4a, but showing lateral flexure/twisting of its ground-engaging blades relative to axis X;
Fig. 5 is a schematic perspective view of a wheel showing the arrangement of a stiffening insert and associated drive axle within its hub;
Fig. 6a is a partial perspective view of a drive shaft arrangement for driving the wheel of the present invention;
Fig. 6b is a cross-section through A-A in Fig. 6a;
Figs. 7a-j are schematic views of various land-based vehicles, each provided with rimless wheels;
Figs. 8a-c are schematic views of a wheel showing different degrees of blade deflection beneath the surface of water at different rotational velocities;
Fig. 9a is a schematic view of a water or amphibious craft provided with wheels showing the lifting of the craft's hull above the water-line;
Fig. 9b is a schematic side and end view of the stern of a water or amphibious craft showing a wheel directing water into a focussing rudder;
Fig. 9c is a schematic side and end view of an outboard motor showing a wheel directing water into a focussing rudder;
Fig. 10 is a partial schematic of a wheel in a water or amphibious craft showing the proximity of a blade tip relative to a "scraper" on a recessed portion of the craft's hull;
Fig. 11 shows schematic side elevation and plan views of ships provided with wheel(s) located at the stern;
Fig. 12 shows a side elevation and plan views of ships provided with wheels located at mid-ships;
Figs. 13a-f are perspective and side elevation views, and views from beneath of various amphibious vehicles provided with rimless wheels; and
Fig. 14 is a schematic side elevation of a jet-ski type vehicle provided with a rimless wheel.

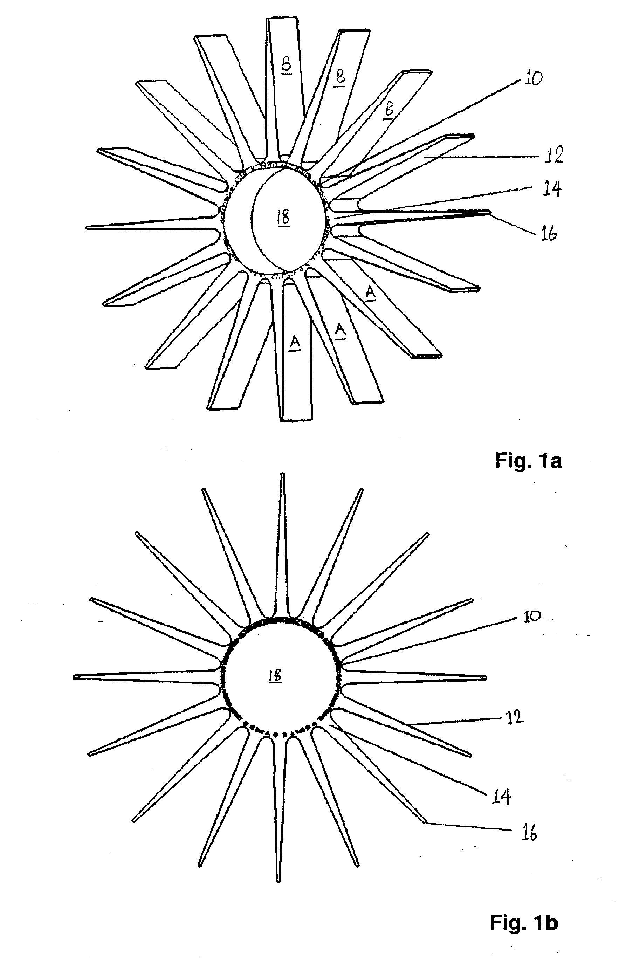

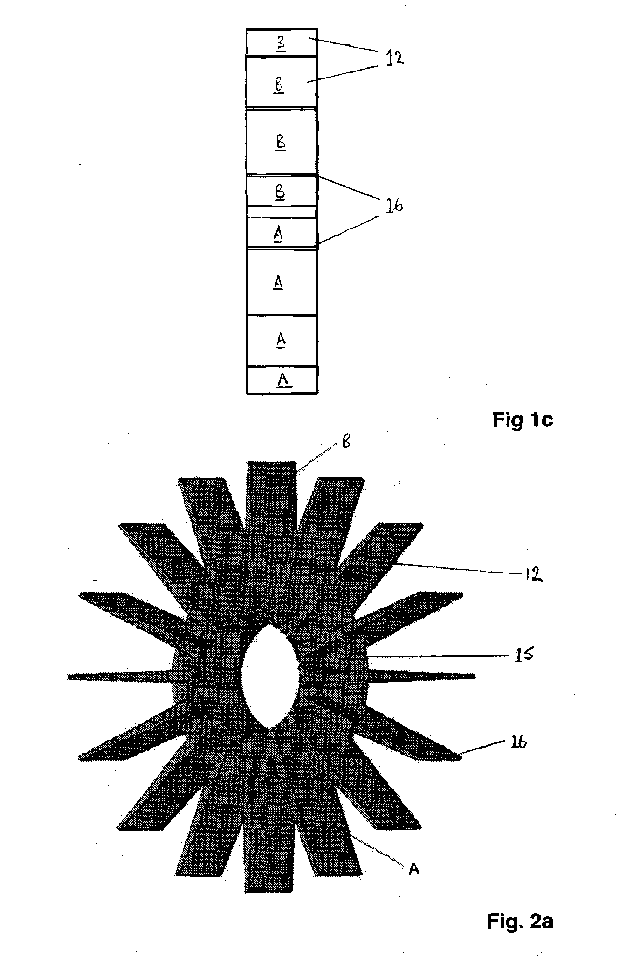

Figures 1a-c show an unloaded wheel comprising an annular hub portion 10 and having sixteen identical blades 12 extending radially outwards from the hub portion 10 and distributed evenly around its circumference. The wheel is cast in one piece from a polyurethane plastics material, each blade 12 having a length in the radial direction measured from its connection to the hub 10 at an inner root portion 14 to an outer tip 16. The hub 10 and blades 12 each have a depth in the axial direction. The inner surface of the hub portion 10 defines a cylindrical passage 18, and each blade 12 is provided with first and second major blade surfaces A, B facing corresponding surfaces A, B of an adjacent blade 12.

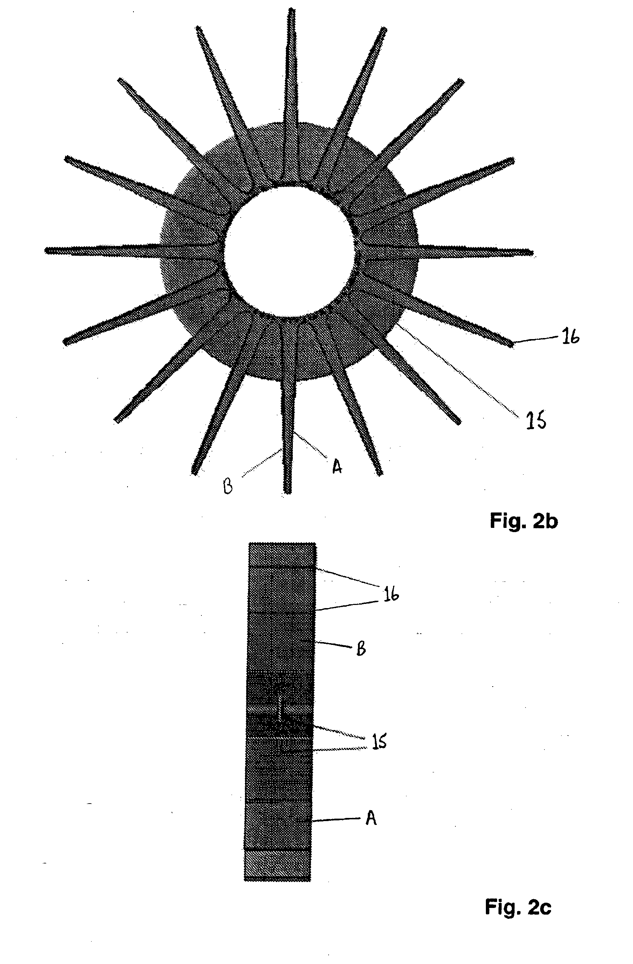

Figures 2a-c show an embodiment according to claim 1 wherein a reinforcing web 15 extends annularly around the hub between adjacent blades 12. As shown most clearly in Figure 2b, the reinforcement web 15 extends radially outwardly along a portion of each blade's length towards the blade tips 16. As best shown in Figure 2c, the reinforcing web 15 lies in a plane orientated perpendicular to the wheel's rotational axis, and coincident with the midpoint along the blade depth (hereinafter, the circumferential plane). It will be appreciated that such an arrangement limits the degree of flexure of each blade 12 and provides additional strength to wheels which are subject to higher applied loads, e.g. when connected to heavier land-based vehicles.

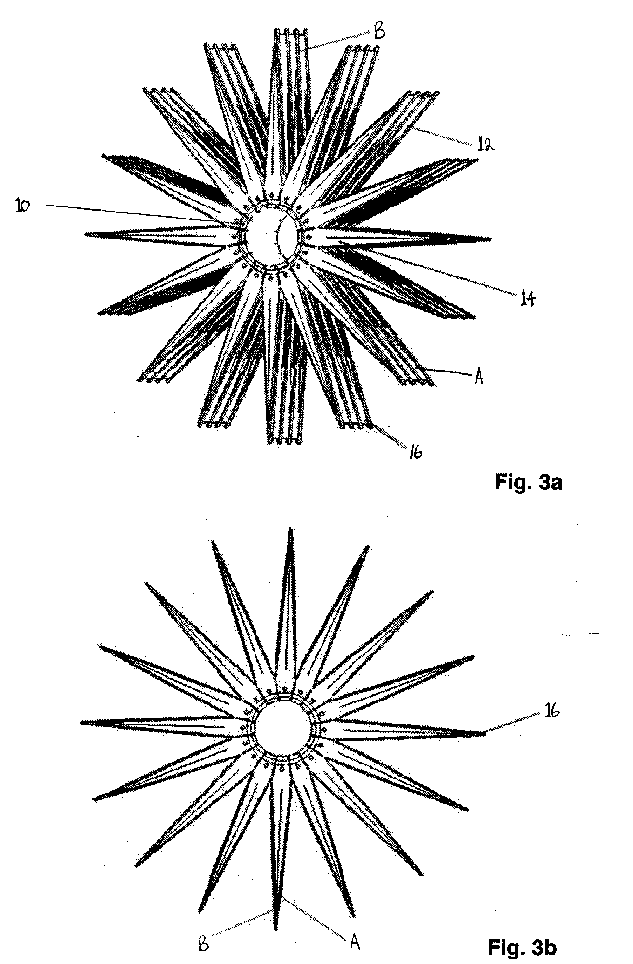

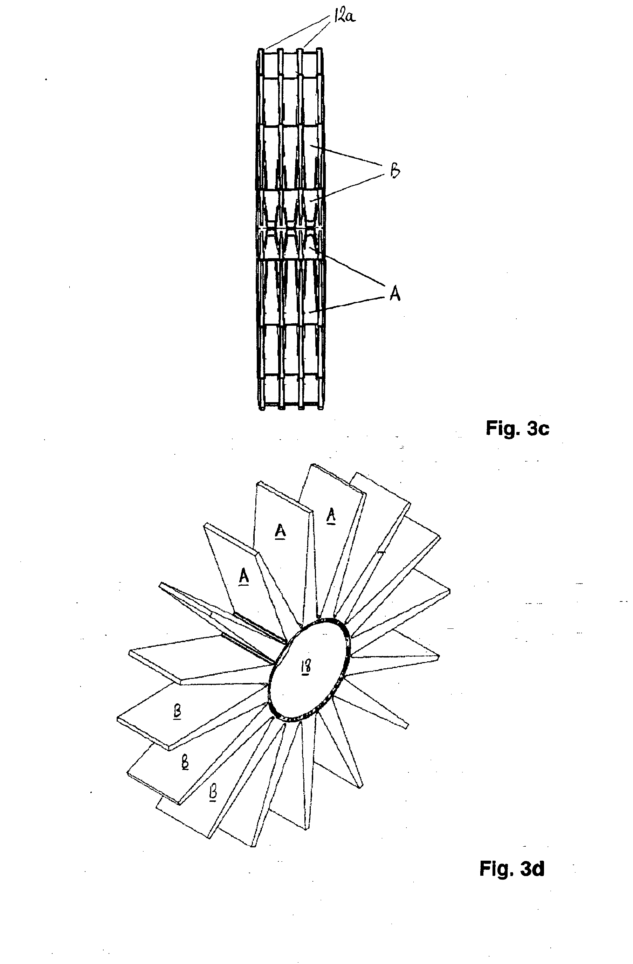

Each blade surface A, B shown in Figures 1a-c and 2a-c is substantially planar along its length between its inner root portion 14 - which blends into the hub portion 10 - and its outer tip 16. The width of each blade 12 in the circumferential plane is less than its depth in the meridian plane and tapers from its inner root portion 14 towards its outer tip 16. The outer tip 16 is truncated such that its outermost edge extends linearly in an axial direction, i.e. each blade 12 is square-ended such that its outermost edge extends perpendicularly with respect to its two longitudinal edges. The measurements of the particular wheel exemplified by the embodiment of Figures 1a-c and 2a-care: wheel diameter = 1500mm; hub (outer) diameter = 436mm; hub (outer) circumference = 1370mm; blade length = 543mm; blade depth = 280mm; blade width at inner root = 46mm; blade width at outer tip = 10mm; and blend radius at junction of blade root and hub = 25mm; total volume of polyurethane plastics material = 91 litres (∼ 94kg); Density: 1.14g/cc; Hardness: 95A Shore; Elongation at Break: 450%; Flexural Modulus: 0.0758 GPa; Tear Strength: 133 kN/m. Figures 3a-c show a further embodiment wherein the blades 12 are arranged to be thicker proximate their roots portions 14. Unlike the aforementioned examples, the first and second major blade surfaces A, B are provided with four equally spaced radial vanes 12a extending from blade root 14 to blade tip 16. The presence of the protruding vanes 12a shown in Figure 3c directs better the liquid/semi-solid flow along the major blade surfaces A, B whilst allowing the blade to be self-cleaning.

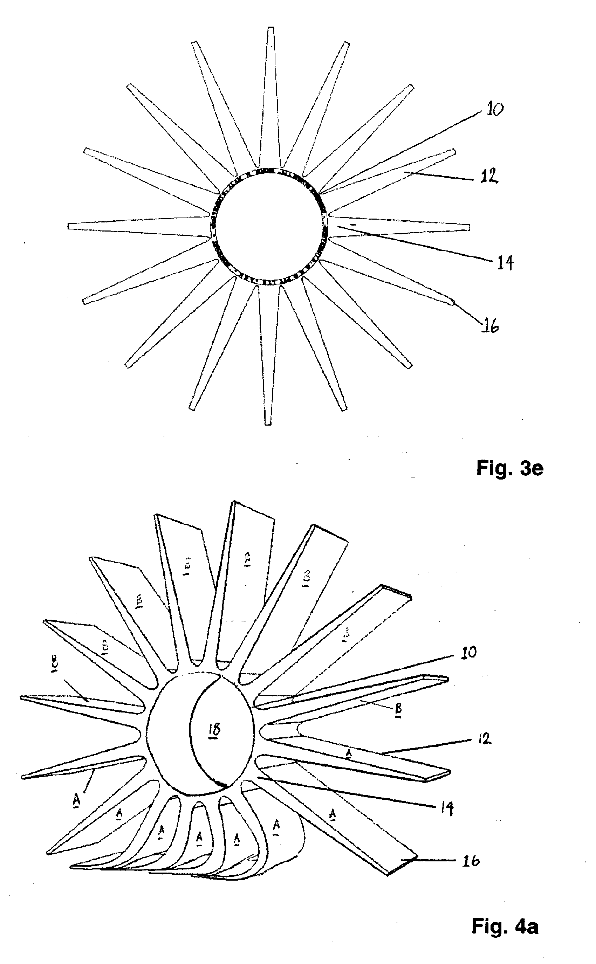

Figures 3d and 3e show a yet further embodiment wherein the circumferential width of the inner root portion 14 and outer tip 16 of each blade is increased to provide extra strength. The measurements of the particular wheel exemplified by the embodiment of Figures 3d and 3e are the same as those noted above with the following exceptions: blade width at inner root = 78mm; blade width at outer tip = 20mm; blend radius at junction of blade root and hub = 5mm; and total volume of polyurethane plastics material = 126 litres (~ 130kg).

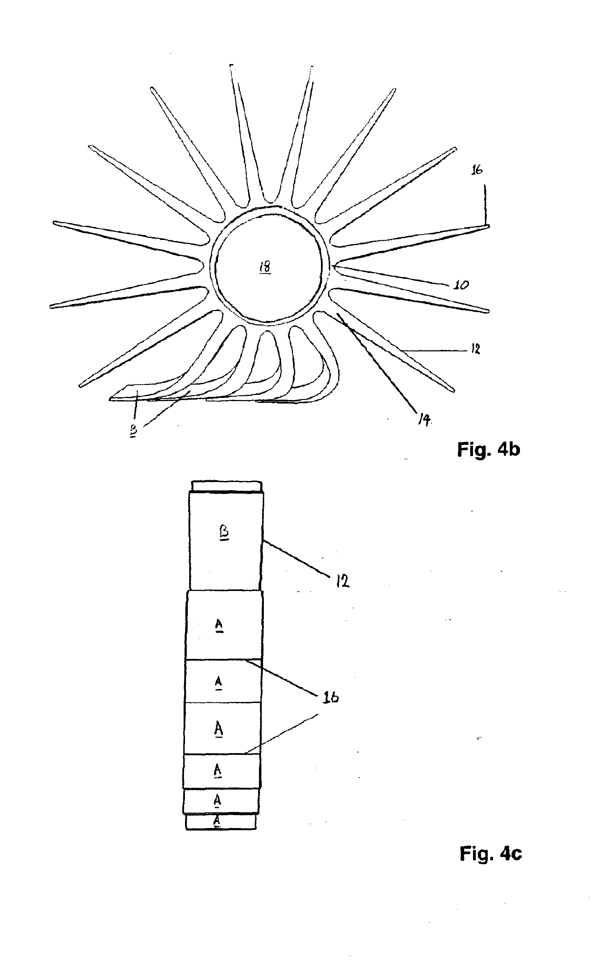

In each of the aforementioned embodiments, since each blade 12 is long relative to its width in the circumferential plane, its cantilevered connection allows a degree of flexure relative to the hub portion 10. The elastomeric material from which the wheel is formed is selected to provide an appropriate stiffness to each blade 12 allowing a degree of independent flexure out of its natural (unloaded) radial configuration relative to the hub portion 10 Whilst the dimensions of each blade 12 dictate that flexure is permitted principally in the circumferential plane, a degree of flexure in the meridian plane is not precluded. Any flexure of a blade 12 in the circumferential plane imparts a corresponding curve to its major blade surfaces A, B, as is exemplified by the embodiment of Figures 4a-c.

As shown in Figures 4a-c, four of the sixteen blades 12 are shown flexed in a clockwise circumferential direction under the influence of an applied radial and circumferential load to the extent that several major blade surfaces B have curved into contact with an opposing major blade surface A of an adjacent blade 12. The stiffness or compliance of the blades 12 and the presence of the applied load, i.e. resulting from an applied torque (in the counter-clockwise direction) and vehicle weight, each cause the radiums of the wheel to become locally reduced. The local reduction in radius is caused by a relative rotation between the hub 10 and four blades 12 leading to their partial collapse against one another so as to support the wheel on an underlying surface terrain (not shown) by outer portions of their major blade surfaces A. The collapsed outer portions of the blades 12 are partially overlapped in the radial direction and their major blade surfaces A, B are curved to varying extents to present an overall increased contact area with the underlying surface terrain. As best seen in Figure 4c, the contact area of the overlapping outer portions of the major blade surfaces present a relatively large rectangular contact area to the underlying surface terrain, thereby serving to improve the traction and breaking of land-based vehicles. Indeed, the square shape of the outer tip 16 of each blade presents a larger, more efficient contact area which can deform better around uneven objects with minimal loss of traction. Furthermore, because each blade 12 has a consistently reducing taper from its inner root portion 14 towards its outer tip 16 this helps to distribute loads more evenly along the portion of the blade contacting the underlying surface terrain, and thus provides for better suspension and more even wear characteristics along each blade surface. The specific geometry of the taper can be adjusted according to variables such as the weight of the vehicle and the expected torque loads it will experience. Advantageously, no internal stiffeners are required within each blade.

Similarly, any flexure of a blade 12 in the meridian plane imparts a corresponding twist (not shown) to its major blade surfaces A, B.

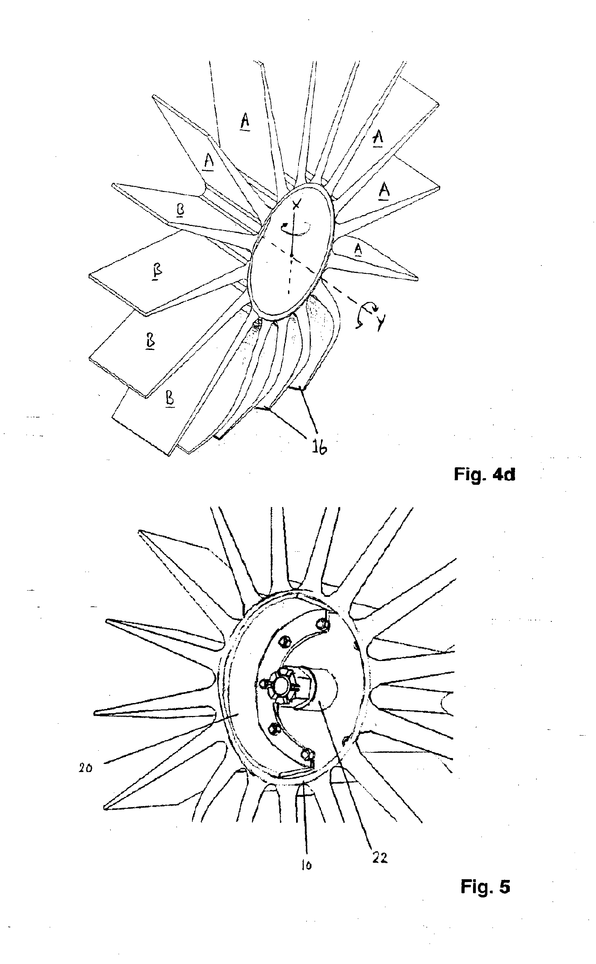

Figure 4d is a perspective view similar to that of Fig. 4a, wherein the four flexed blades 12 are also exposed to a lateral load about a vertical axis X. The additional lateral load results from the turning of an individual wheel (in the counter-clockwise direction around axis X), or from skid steering of a fixed-wheeled vehicle. The stiffness or compliance of the blades 12 and the presence of the additional lateral load imparts a twist to each blade 12 such that the blade tips 16 engage the underlying surface terrain in a staggered fashion. As the wheel rotates in a counter-clockwise direction about axis Y, the blade tips 16 engage the underlying surface terrain sequentially. Simultaneous rotation of the wheel or vehicle about a vertical axis X (which need not be positioned where shown in Figure 4d) means that the next blade to contact the underlying surface terrain will be displaced laterally with respect to the preceding blade 12. As shown in Figure 4d, the four ground-engaging blades 12 are therefore independently twisted to varying degrees due to combined lateral and rotational movement of the wheel. Such an arrangement reduces wear and energy consumption associated with turning or skid-steering.

Figure 5 is a partial perspective view of a wheel showing the arrangement of a stiffening insert 20 and associated drive axle 22 within its hub 10. The stiffening insert 20 is generally cylindrical and is dimensioned such that its outer diameter is substantially equal to the inner diameter of the hub portion 10 so as to be a tight fit. The insert 20 is preferably formed from steel, stainless steel or aluminium and may be bonded to the inner cylindrical surface of the hub portion 10.

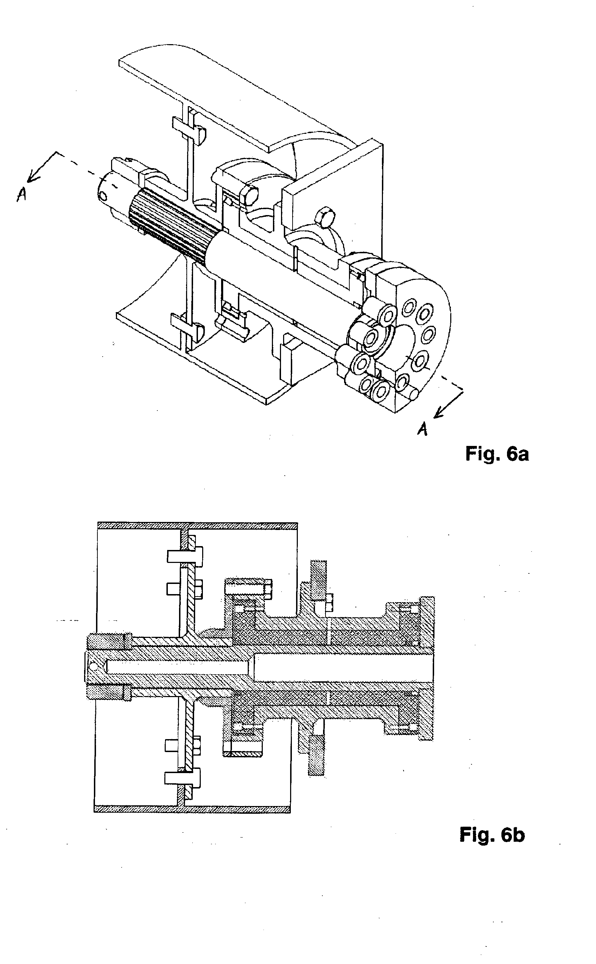

Figure 6a shows a partial perspective view of a drive shaft arrangement for driving the wheel of the present invention and Figure 6b is a cross-section through line A-A in Figure 6a. The internal structure of the drive shaft comprises a high load, low friction cutlass bearing (as opposed to conventional roller bearings) and is sealed against ingress of external fluids such as salt water, mud and aggressive oils.

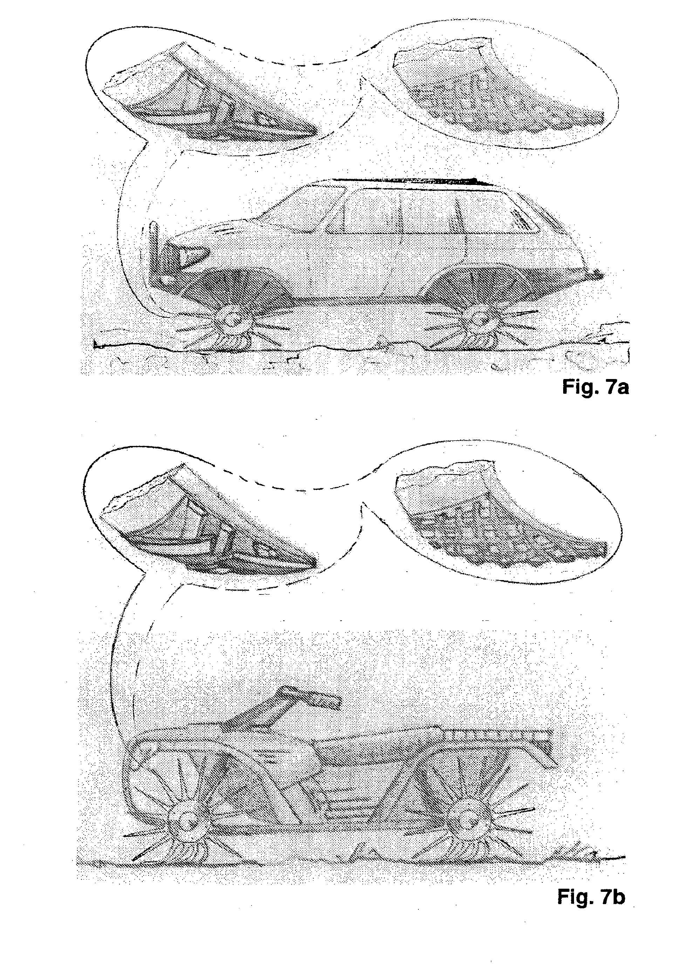

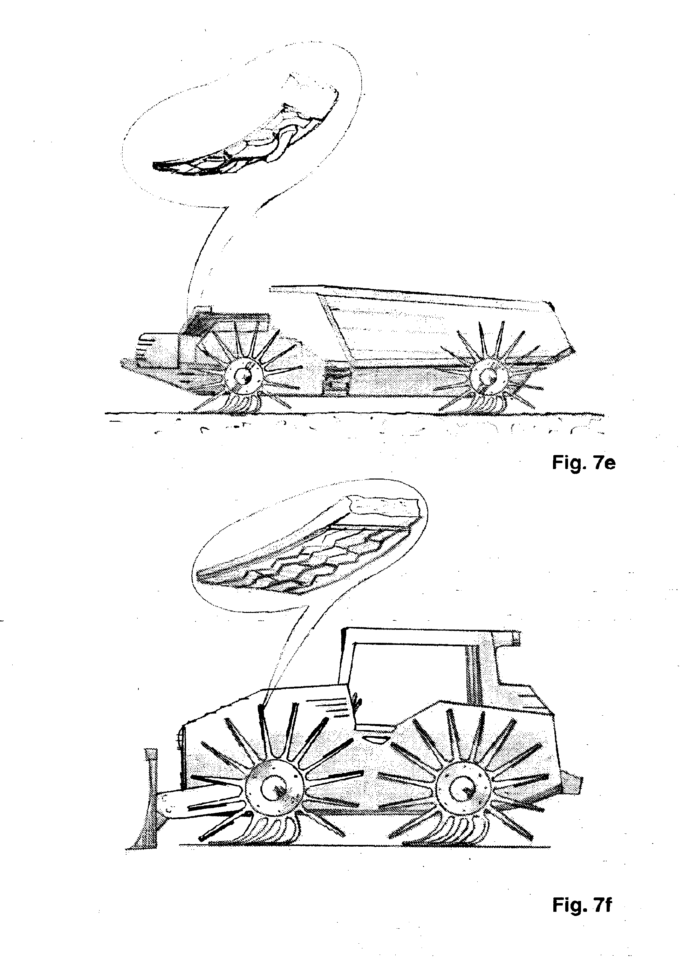

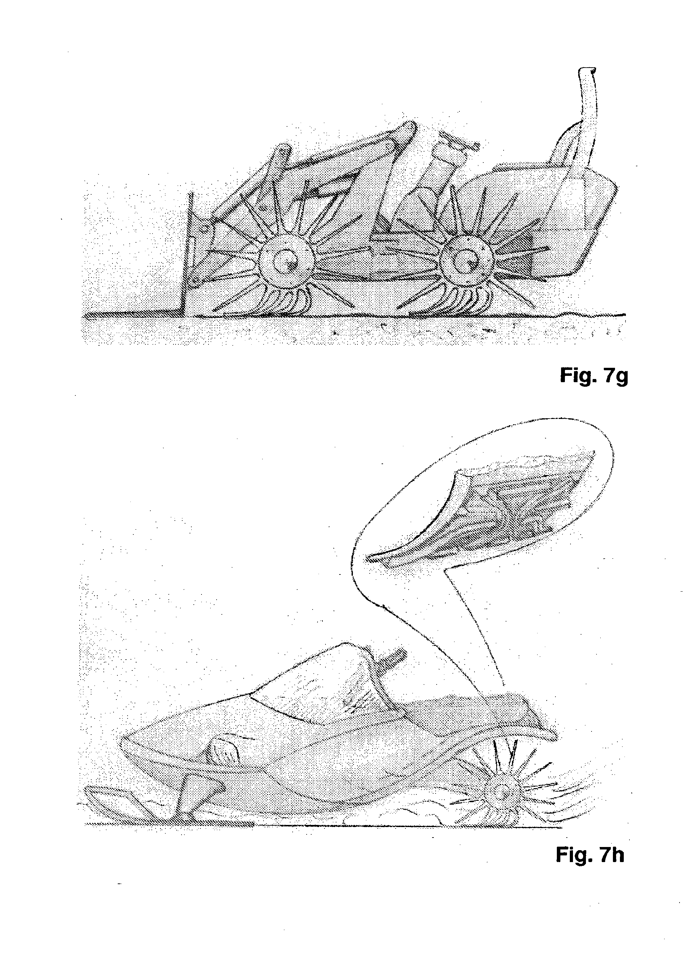

Figures 7a-j show side elevations of numerous different types of land-based vehicles used for recreational, agricultural, industrial and military purposes, each being provided with rimless wheels and manoeuvrable by means of skid-steering. It will be appreciated that the following are merely non-limiting examples of many different types of land-based vehicles to which the wheel of the present invention can be applied.

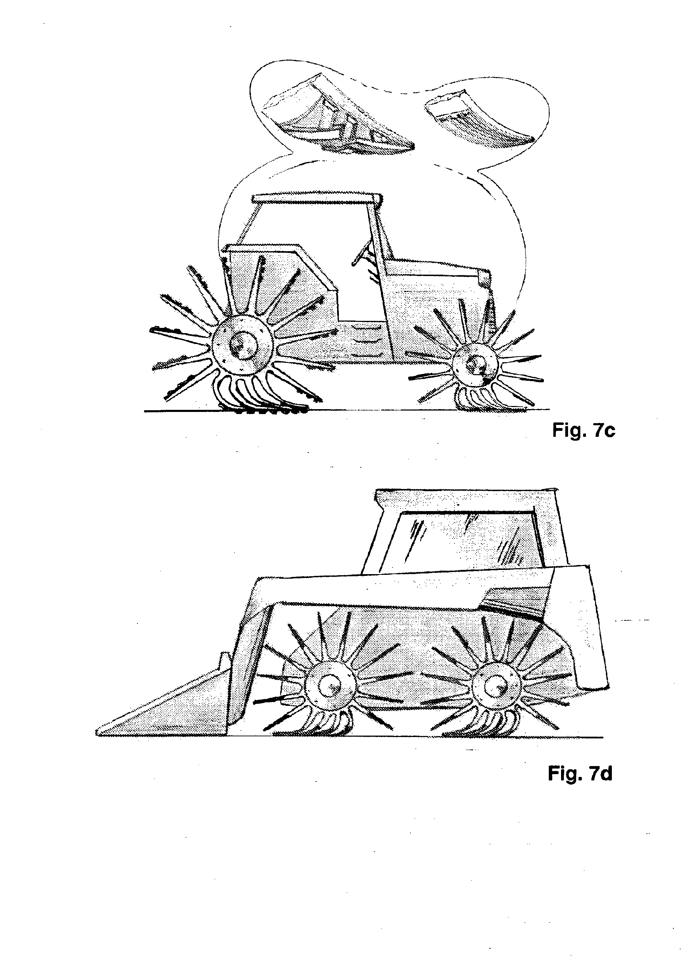

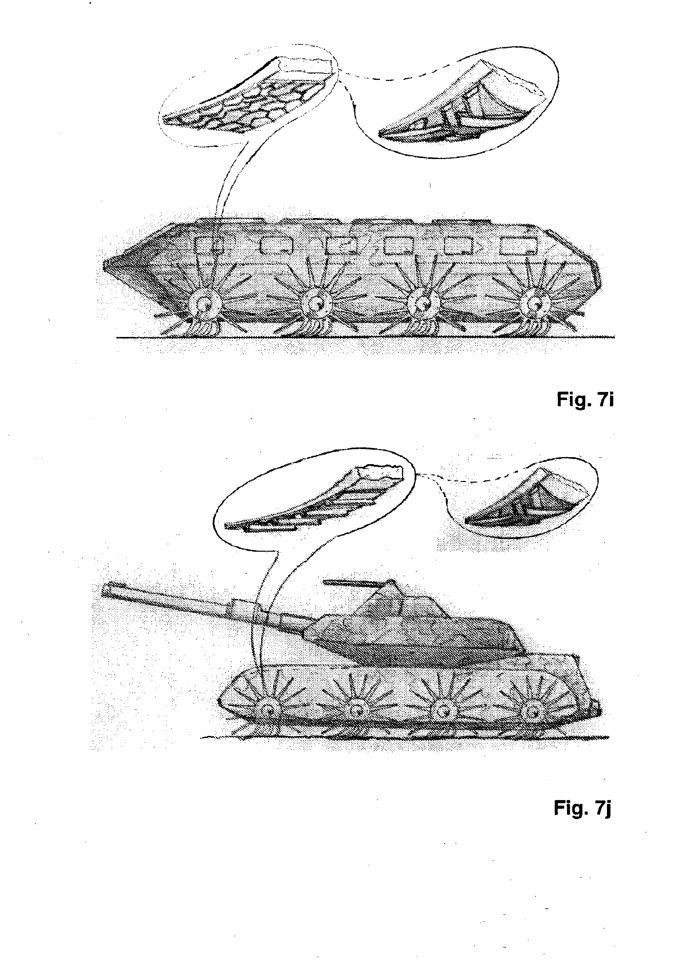

Figures 7a and 7b show a four wheel drive (4WD) car and bike respectively, wherein each wheel has been provided with sacrificial wear pads 24 on its major blade surfaces A, B to increase traction by imitating the tyre treads of conventional 4WD vehicle wheels. Figure 7c shows a farm tractor wherein each wheel has been provided with sacrificial wear pads 24 on one major blade surface A, B of each blade 12. Figures 7d-g show a skid-steer front loader, a mining/earthmoving haulage truck, a bulldozer and an articulated loader respectively each of which are provided with appropriate sacrificial wear pads 24 in the form of, for example, metal grouser plates. Figure 7h shows a trackless snowmobile provided with a single rear wheel in accordance with the present invention. Such an arrangement provides enhanced suspension and a cheaper, less complicated and more reliable alternative to tracked propulsion. Figures 7i and 7j show an armoured personnel carrier and a tank respectively each of which may be provided with appropriate sacrificial wear pads 24 as determined by the surface terrain over which they are intended to travel.

In use, land-based vehicles employing wheels in accordance with the present invention enjoy numerous advantages as compared to conventional wheels arrangements. Firstly, the wheels of the present invention present a significantly greater contact area against the underlying surface terrain as described above with reference to Figures 4a-c. Increased contact area leads to superior traction whilst spreading applied pressure on the underlying surface terrain to reduce localised compaction or damage. A reduced environmental impact is particularly important in agricultural settings where compacted soil is undesirable, or on virgin surfaces such as fragile botanical growth in desert areas. Traction can be further improved by applying traction-enhancing layers 20 to one or both of the major blade surfaces A, B. Indeed, the traction-enhancing layers 20 may replicate the treads of conventional vehicle wheels or tracks.

Traction tests were performed using the wheel of Figure 4a-c to assess the degree of blade deflection under simulated traction loads. The test involved applying four different radial loads onto the hub portion 10, manually rotating the wheel in the circumferential plane to simulate a traction load, and measuring the distance from the underlying surface terrain to the lowest part of the hub 10. For the four loads A-D applied, the results were as follows: Load A = 250 kg, 29.5 cm; Load B = 355 kg, 26.5cm; Load C = 450 kg, 25 cm; and Load D= 675 kg, 23.5cm.

The inherent resilience of the blades 12 results in a natural suspension providing a smoother, more cushioned ride for passengers whilst complementing, or obviating the need for, separate vehicle suspension mechanisms. Another advantage of the resilience of the blades 12 is that they are capable of twisting along their length as discussed above with reference to Figure 4d. This is particularly advantageous for skid-steer vehicles. Since the wheels of the present invention do not require inflation, they are resistant to damage and punctures are no longer an issue. Furthermore, it will be appreciated that the wheel of the present invention is self-cleaning by virtue of the resilient flexing of its blades during rotation which separates solid or semi-solids material from the blade surfaces. The surface profile of the blades may be adapted to aid this self-cleaning effect.

A particularly advantageous feature of the wheel of the present invention when used on land-based vehicles resides in its ability to produce an automatic lower gearing (and hence increased tangential force) under increased torque. This is achieved by the aforementioned local reduction in wheel radius caused by the flexure of those blades engaging the underlying surface terrain. It is envisaged that many land-based vehicles may be provided with a single wide-bladed wheel at the rear for providing enhanced thrust. This would obviate the need for separate rear suspension arrangements and, in certain circumstances, would obviate the need for powered front wheels. It will be appreciated that the structure of such vehicles would be greatly simplified by removing the need for complicated and expensive suspension and gearing arrangements.

Vehicles provided with wheels in accordance with the present invention are therefore able to move more easily over surface terrains lacking in cohesion, and to climb steeper slopes.

These are particularly advantageous features for trucks or other vehicles used to access open cut mines which can be cut with steeper slopes than is presently possible. Another advantage for large scale industrial vehicles is that wheels can potentially be scaled up beyond the normal safe limits of conventional pneumatic tyres (generally having a 350 ton weight limit) without any danger of exploding due to the typical large pressures involved. Employing wheels according to the present invention in place of conventional track-and-wheel arrangements on, for example, bulldozers, military tanks and the like, eliminates the noise associated with rotating chains and tracks, reduces cost and facilitates cheaper and quicker repairs. A yet further advantage for military vehicles such as tanks and personnel carriers is enhanced battle damage resistance. For example, the wheels of the present invention, which are typically provided with sixteen blades 12, can operate sufficiently even if some blades are damaged or blown off by bullets or explosive devices whereas local damage to conventional track arrangements can entirely immobilise a vehicle.

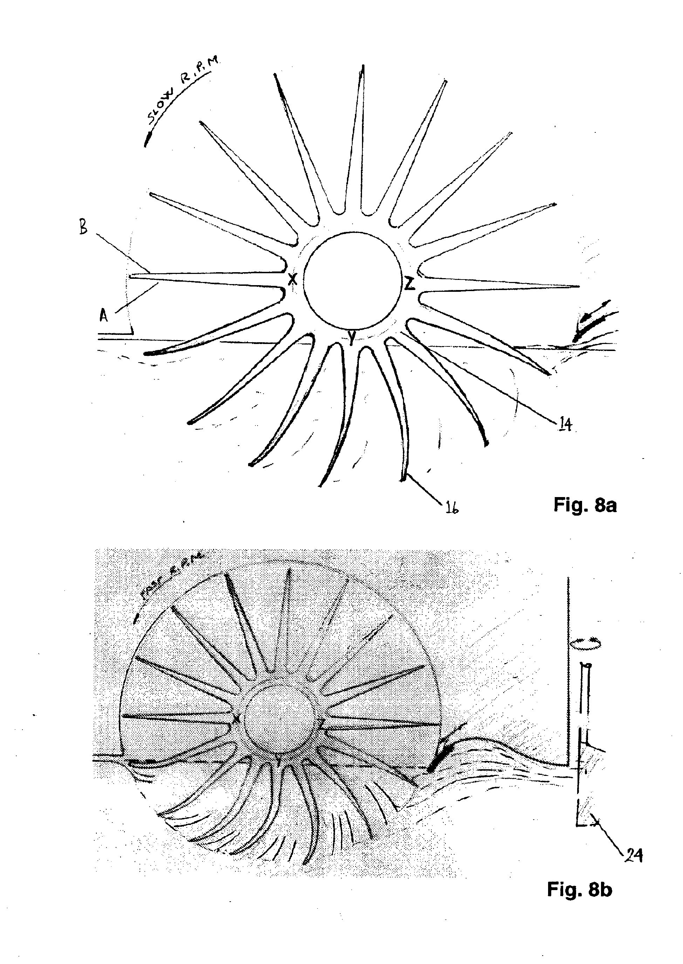

Figures 8a-c show a partially submersed wheel for providing thrust to a water craft in which seven of the sixteen blades 12 are flexed to varying degrees in a clockwise circumferential direction during rotation of the wheel in water. The major blade surfaces A, B of each blade within the water are curved due to the opposing fluid resistance against each major blade surface A. It will be appreciated that the blades 12 will experience a continuous range of deflections dependent upon the rotational speed of the wheel through the water, and the representations of Figs 8a-c merely show three isolated examples.

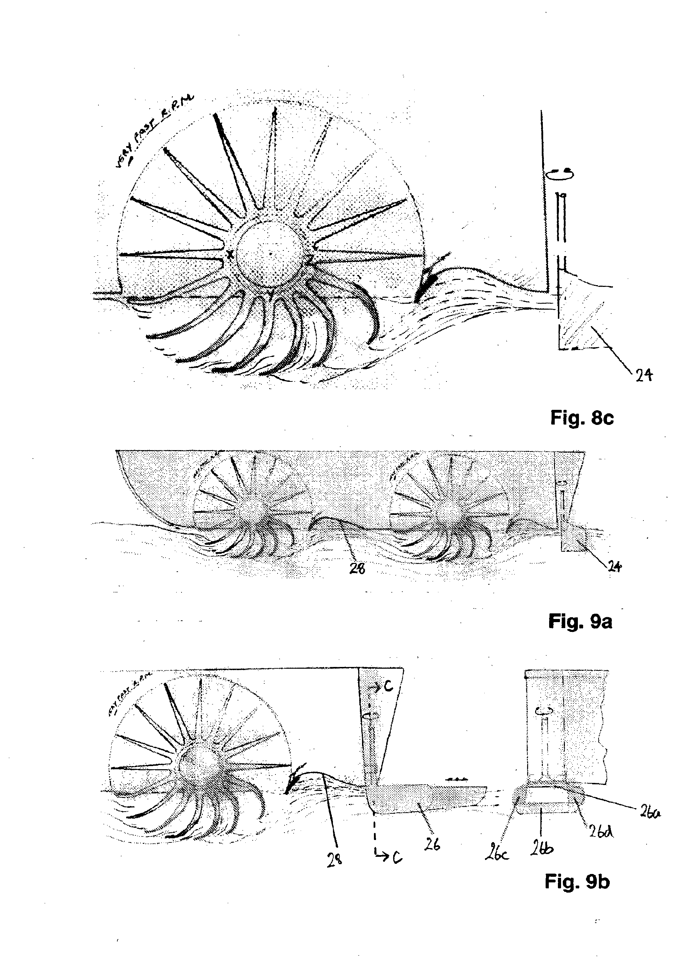

Figure 8a illustrates a slight deflection of the blades 12 occurring during a slower rotation of the wheel. As the rotational velocity of the wheel increases, the degree of deflection of the blades increases as shown in Figures 8b and 8c. A vehicle's kinetic energy generated by the wheel shown in Figures 8a-c is a function of the mass and velocity of the water displaced by the blades 12, i.e. the faster the horizontal displacement of water sternward above the waterline, the more forward thrust is produced. The wheels of the present invention are arranged to be much narrower in the depth dimension than those of conventional paddle wheels on water craft which generally extend across its full width. However, the rectangular shape of the blades 12 helps to maximise surface area and eliminate the Coanda effect which would otherwise further reduce the thrust provided by blades having curved edges. In order to compensate for the reduced width, and hence reduced surface area for displacing water, the wheels of the present invention rotate much faster to create "jets" of water at the craft's stern as described further below.

In a conventional rigid paddle wheel, the blade orientated vertically within the water at any one time during its rotation (i.e. the lowermost blade) is most efficient at propelling the craft forward. However, significant energy is wasted during the blades rotation as it first pushes water downward and then lifts it upwards. However, as shown in Figures 8a-c, those blades 12 engaging the water are significantly curved as compared to those extending above the waterline due to the marked difference in fluid density between water and air, and due to the inherent flexure of the blades 12. The operation of the wheel can be described with reference to the sequential blade root positions X, Y, Z indicated in Figures 8a-c. Just before entering the water at position X, blade 12 extends radially from its hub portion 10 such that its major blade surfaces A, B are substantially planar. As blade 12 impacts the water shortly after position X, the major blade surfaces A, B immediately begin to flex in a clockwise direction due to the resistance imparted by water on the outer portion of major blade surface A. The tapered profile of the blade 12 means that its radius of curvature increases towards the blade tip 16. This flexing serves to store energy in the blade 12. During its rotation towards position Y, the extent of deflection progressively increases as a greater surface area of the blade is gradually immersed, and as water is displaced both downwards and sternwards. At position Y, the blade root 14 is at its deepest point beneath the waterline and the resistive forces against the major blade surface A are at their maximum extent causing significant circumferential lag of blade tip 16 with respect to its corresponding blade root 14. During its rotation towards position Z, the deflection of the blade 12 quickly decreases as it emerges from the water until it resumes its radial configuration at position Z due to its inherent resilience and due to the influence of centrifugal force.

As blade root 14 travels between positions Y and Z, the outer portion of the blade 12 moves at a faster angular velocity due to its transition from a fully deflected to a non-deflected configuration, i.e. as the energy stored in the blade during its travel between positions X and Y is released sternward toward the rudder 24. The resultant acceleration of major blade surface A during this critical 90 degree sector of rotation maximises the velocity of water being forced upwards and backwards which translates into an increased forward thrust.

Figure 9a illustrates how the rapid rotation of wheels (as shown in Figure 8c) on the surface of the water can create an upward force tending to lift a craft's hull relative to its resting position in the water. At the fastest rates of rotation, a lift of approximately 10cm is possible and the craft can be seen to effectively "walk" on the surface of the water.

Figure 9b shows water being propelled sternwards into a focussing rudder 26 adapted to create a jet-like thrust of water. The focussing rudder 26 is positioned immediately behind the wheel so as to receive the water being forced sternward by the blades travelling between positions Y and Z, as noted above. The end view taken along rotational axis C-C of the focussing rudder 26 shows its top, bottom and side walls 26a-d, each of which converge sternwards to define a passage through which water is accelerated due to a venture effect. The top wall 26a of the focussing rudder 26 is arranged to be contiguous with a recessed portion 28 of the craft's hull thereby promoting a more linear/laminar flow of water whilst minimising the risk of the passage being clogged by debris.

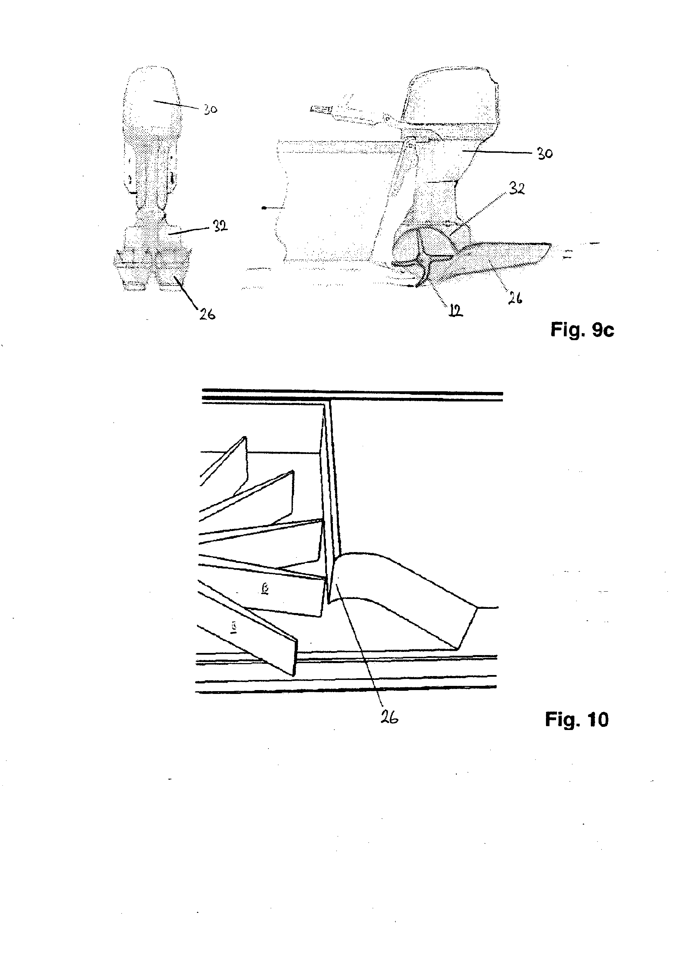

Figure 9c shows a further embodiment of the present invention in which the wheel is provided as part of an outboard motor 30. The particular wheel illustrated is provided with four relatively short blades 12 which rotate beneath a housing 32 and propel water sternwards into an integral focussing rudder 26 in a similar manner as discussed above. A marine craft employing such a wheel has the benefit of being able to travel in shallower water that craft having conventional propellers. Such a wheel is also less likely to harm sea-life, e.g. manatees found in coastal waters in Florida.

Figure 10 shows a wheel in a water or amphibious craft showing the proximity of a blade tip relative to a scraper 26 on the craft's hull serving to remove debris and direct fluid flow along the blade surfaces.

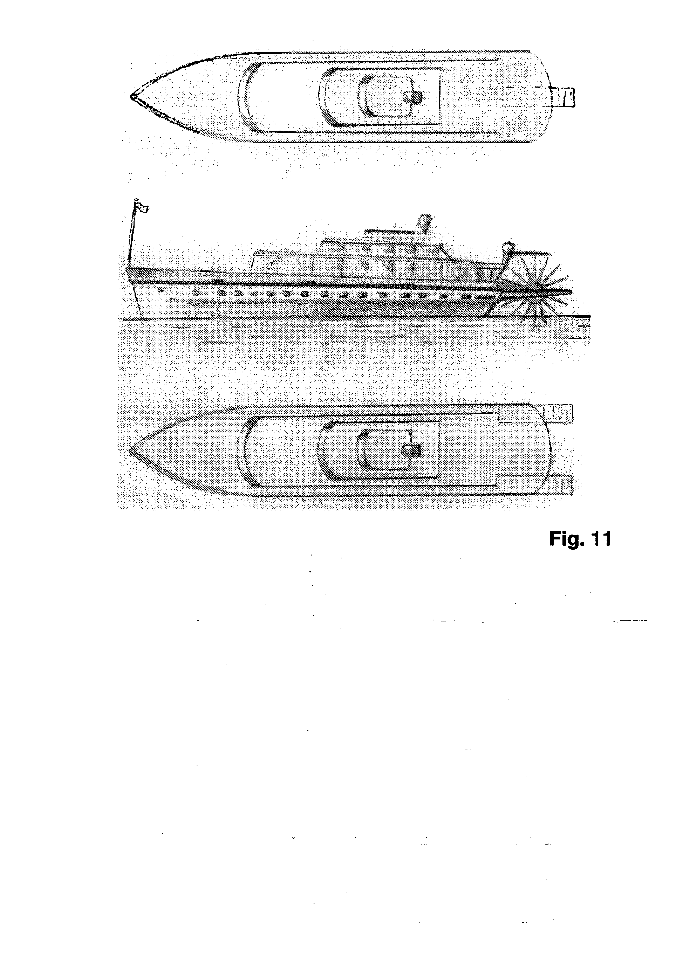

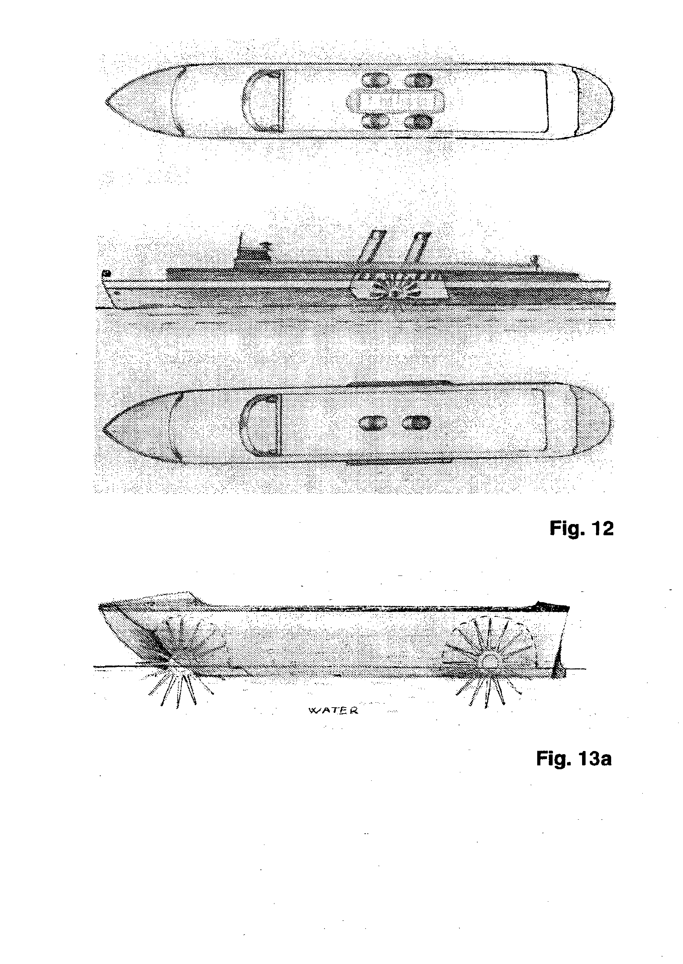

Figures 11 and 12 shows two examples of water craft each provided with rimless wheels. It will be appreciated that the following are merely non-limiting examples of many different types of water-based vehicles to which the wheel of the present invention can be applied.

Figure 11 shows a side view of a ship provided with a single wheel at the stern whilst the associated plan views illustrate two alternative arrangements comprising a single wheel and twin wheels respectively.

Figure 12 shows a ship provided with a wheel at mid-ships whilst the associated plan views illustrate two alternative arrangements comprising a single wheel and twin wheels respectively.

Figures 13a-f show various amphibious vehicles each provided with rimless wheels. It will be appreciated that the following are merely non-limiting examples of many different types of amphibious vehicles to which the wheel of the present invention can be applied.

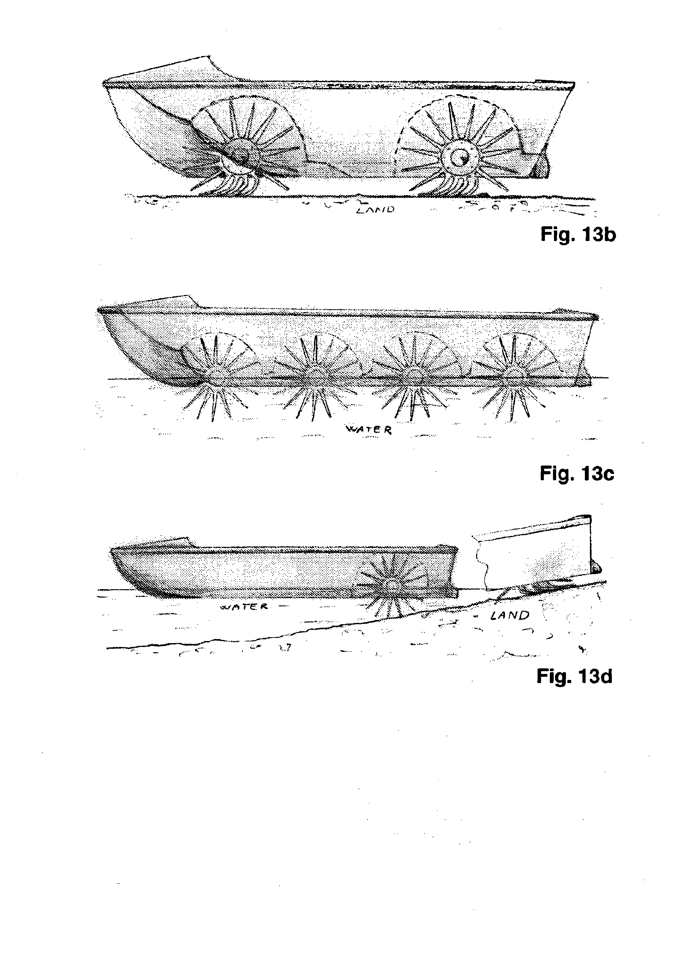

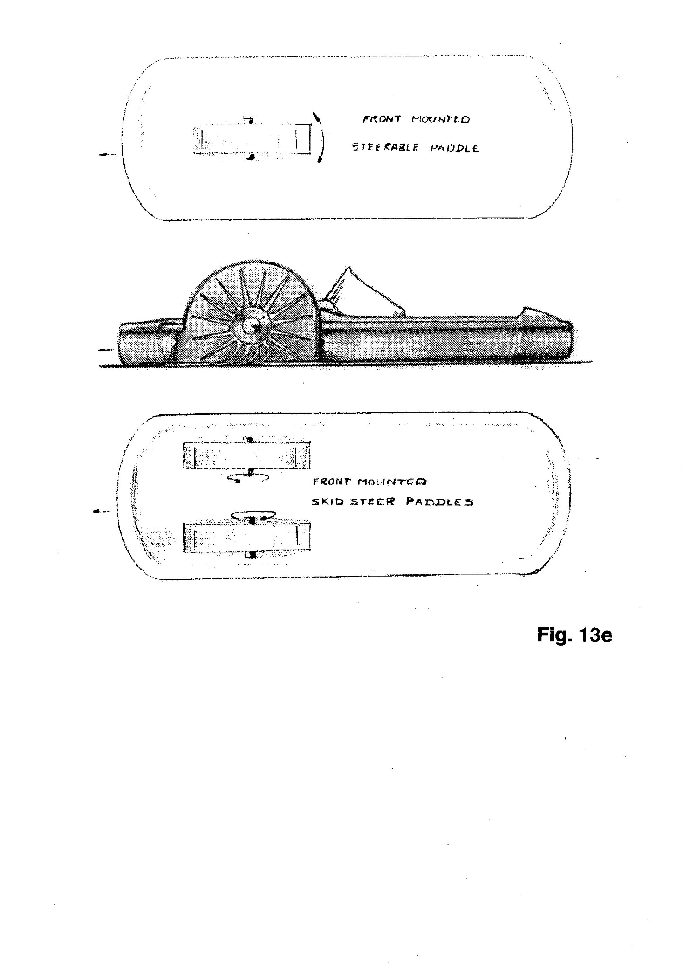

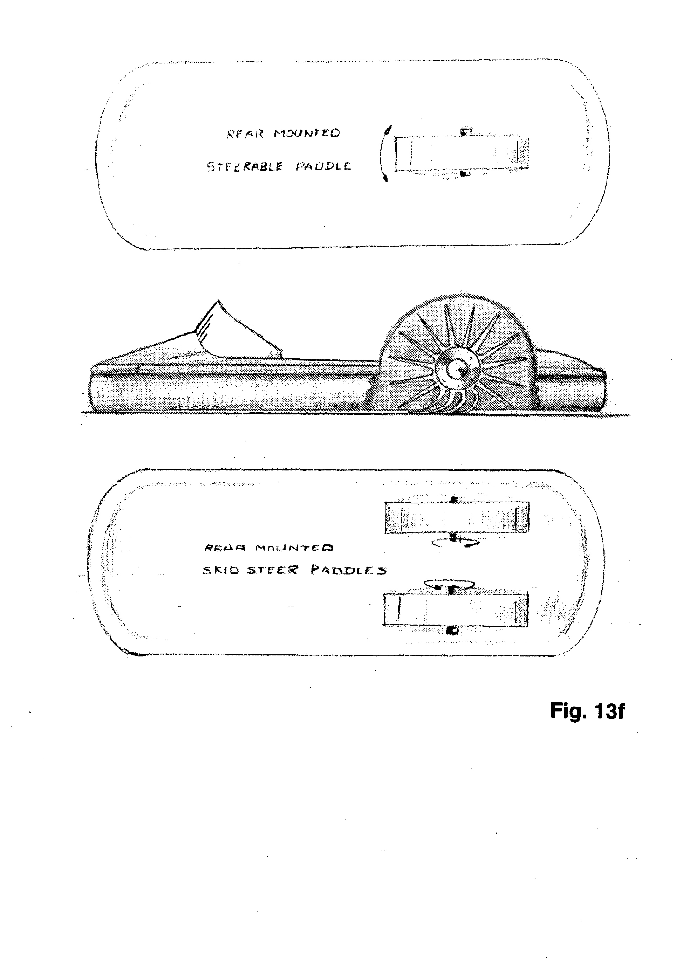

Figures 13a and 13b show a four-wheeled vehicle in water and on land respectively. Figure 13c shows an eight-wheeled vehicle in water. It will be appreciated that the vehicles shown in Figures 13a-c are capable of travelling out of the water and over an underlying surface terrain due to the fact that the craft's hull is evenly supported by front and rear wheels. Conversely, the vehicle shown in Figure 13d is capable of only limited travel over an underlying surface terrain due to the absence of wheel at one of its ends. Such a vehicle is capable of crawling out of water to a limited extent as shown until the hull at the front end engages the surface terrain. Figures 13e show an example of a hovercraft provided with forward wheel(s). The single wheel shown first in Figure 13e is pivotable to facilitate steering of the hovercraft whilst the fixed twin wheels shown in the remaining views achieve the same effect by means of skid steering. Figure 13f shows an alternative example of a hovercraft which is the same as that described above with the exception that the wheels are provided towards the rear of the vehicle. In view of the absence of any ground-engagement, hovercraft are notoriously difficult to steer. The wheel of the present invention enhances the steering of such vehicles and provides a more efficient means of thrust at low vehicle speeds. A further advantage of the wheel of the present invention when used in hovercraft is that it allows the vehicle to move over inclined terrain without tending to follow contours as is the case with conventional hovercraft.

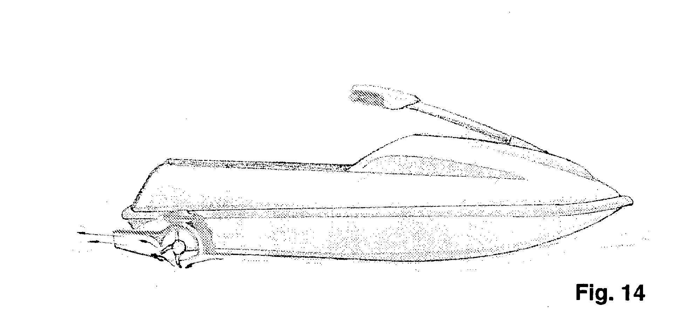

Finally, Fig. 14 shows a jet-ski type vehicle employing a rimless wheel having four relatively short cantilevered blades extending from its hub.

Modifications and improvements may be made to the foregoing without departing from the scope of the invention as defined by the accompanying claims. The particular surface profile of the major blade surfaces A, B can be adapted to suit the media through which the vehicle is intended to travel. For example, land-based vehicles could be provided with zig-zag protrusions instead of the radial vanes shown in Figure 3c in order to improve traction. Whilst the focussing rudder 26 in Figure 9b is shown having top, bottom and side walls 26a-d, a sufficient thrust may still be achieved without the bottom wall 26b.

## Claims

1. A rimless vehicle wheel comprising:
(i) a hub (10) configured for rotational attachment to a vehicle; and
(ii) a plurality of cantilevered blades (12) spaced around the hub, each blade having an inner root (14) extending from the hub, an outer tip (16), and first and second major blade surfaces (A, B) extending between the root and tip;
wherein each blade has a stiffness allowing independent flexure between a first unloaded blade configuration and any number of second loaded blade configurations; and **characterised in that** a reinforcing web (15) extends circumferentially between adjacent blades proximate the hub.

2. A rimless vehicle wheel according to claim 1, wherein when in the first unloaded blade configuration, each blade (12) extends substantially radially from the hub (10), and the first and second major blade surfaces (A, B) are substantially planar along their lengths between the root (14) and tip (16).

3. A rimless vehicle wheel according to claim 1 or 2, wherein when in any of the second loaded blade configurations, at least part of the outer tip (16) of each blade (12) is moved out of radial alignment with its inner root (14), and the first and second major blade surfaces (A, B) are curved under load between the root and tip.

4. A rimless vehicle wheel according to any preceding claim, wherein the length of each blade (12) from root (14) to tip (16) is between 30% and 50% of the circumference of the hub (10) measured at the blades' inner roots.

5. A rimless vehicle wheel according to any preceding claim, wherein the depth of each blade (12) from front to back in the axial direction is between 40% and 60% of the length of each blade from root (14) to tip (16).

6. A rimless vehicle wheel according to any preceding claim, wherein the width of each blade (12) in the circumferential plane tapers towards its outer tip (16).

7. A rimless vehicle wheel according to any preceding claim, wherein the outer tip (16) of each blade (12) is truncated.

8. A rimless vehicle wheel according to any preceding claim, wherein each blade (12) has a stiffness which facilitates both circumferential bending and lateral twisting relative to the first unloaded blade configuration.

9. A rimless vehicle wheel according to any preceding claim, wherein each blade (12) has a stiffness and/or spacing of blades around the hub (10)such that, when in a second loaded blade configuration, a major blade surface (A, B) of one blade is capable of curving into contact with the opposing major blade surface (A, B) of an adjacent blade.

10. A rimless vehicle wheel according to any preceding claim, wherein the stiffness and/or spacing of blades (12) around the hub (10) is such that, when in a second loaded blade configuration, one or more of the first and/or second major blade surfaces (A, B) is capable of supporting the wheel on an underlying surface by facilitating a degree of relative rotation between the hub and outer tip (16).

11. A rimless vehicle wheel according to claim 10, wherein the stiffness of each blade (12) is such that, when supporting a hub (10) on a planar surface, a hub load of 2.5kN causes blade tips (16) in contact with the surface to deflect circumferentially by at least 10% of the blade length from root (14) to tip (16).

12. A rimless vehicle wheel according to any preceding claim, wherein each blade (12) is provided with traction-enhancing means (12a) on its first and/or second major blade surface (A, B).

13. A rimless vehicle wheel according to any preceding claim, wherein the hub (10) is provided with sixteen cantilevered blades (12).

14. A rimless vehicle wheel according to any preceding claim, wherein the hub (10) and the cantilevered blades (12) are moulded in one piece from an elastomeric material.

15. A passenger vehicle **characterised in that** it comprises at least one rimless wheel according to any of claims 1 to 14.

## Patentansprüche

1. Ein felgenloses Fahrzeugrad, das Folgendes beinhaltet:
(i) eine Nabe (10), die zur Drehanbringung an einem Fahrzeug konfiguriert ist; und
(ii) eine Vielzahl von ausgekragten Schaufeln (12), die um die Nabe herum mit Abstand angeordnet sind, wobei jede Schaufel einen sich von der Nabe erstreckenden inneren Fuß (14), eine äußere Spitze (16) und eine erste und eine zweite sich zwischen dem Fuß und der Spitze erstreckende Hauptschaufeloberfläche (A, B) aufweist;
wobei jede Schaufel eine Steifigkeit aufweist, die unabhängige Biegung zwischen einer ersten nicht belasteten Schaufelkonfiguration und einer beliebigen Anzahl von zweiten belasteten Schaufelkonfigurationen zulässt; und **dadurch gekennzeichnet, dass** sich ein Verstärkungssteg (15) nahe der Nabe in Umfangsrichtung zwischen benachbarten Schaufeln erstreckt.

2. Felgenloses Fahrzeugrad gemäß Anspruch 1, wobei, wenn in der ersten nicht belasteten Schaufelkonfiguration, sich jede Schaufel (12) im Wesentlichen radial von der Nabe (10) erstreckt und die erste und die zweite Hauptschaufeloberfläche (A, B) entlang ihren Längen zwischen dem Fuß (14) und der Spitze (16) im Wesentlichen eben sind.

3. Felgenloses Fahrzeugrad gemäß Anspruch 1 oder 2, wobei, wenn in einer beliebigen der zweien belasteten Schaufelkonfigurationen, zumindest ein Teil der äußeren Spitze (16) jeder Schaufel (12) aus der radialen Ausrichtung mit seinem inneren Fuß (14) bewegt wird und die erste und die zweite Hauptschaufeloberfläche (A, B) wischen dem Fuß und der Spitze unter Last gekrümmt sind.

4. Felgenloses Fahrzeugrad gemäß einem der vorhergehenden Ansprüche, wobei die Länge jeder Schaufel (12) vom Fuß (14) zur Spitze (16) zwischen 30 % und 50 % des Umfangs der Nabe (10), gemessen an den inneren Füßen der Schaufeln, ist.

5. Felgenloses Fahrzeugrad gemäß einem der vorhergehenden Ansprüche, wobei die Tiefe jeder Schaufel (12) von der Vorderseite zur Rückseite in der axialen Richtung zwischen 40 % und 60 % der Länge jeder Schaufel von dem Fuß (14) zur Spitze (16) ist.

6. Felgenloses Fahrzeugrad gemäß einem der vorhergehenden Ansprüche, wobei sich die Breite jeder Schaufel (12) in der Umfangsebene zu ihrer äußeren Spitze (16) hin verjüngt.

7. Felgenloses Fahrzeugrad gemäß einem der vorhergehenden Ansprüche, wobei die äußere Spitze (16) jeder Schaufel (12) abgestumpft ist.

8. Felgenloses Fahrzeugrad gemäß einem der vorhergehenden Ansprüche, wobei jede Schaufel (12) eine Steifigkeit aufweist, die sowohl das Biegen in Umfangsrichtung als auch das laterale Verdrehen relativ zu der ersten nicht belasteten Schaufelkonfiguration ermöglicht.

9. Felgenloses Fahrzeugrad gemäß einem der vorhergehenden Ansprüche, wobei jede Schaufel (12) eine Steifigkeit und/oder einen Abstand der Schaufeln um die Nabe (10) aufweist, so dass, wenn in einer zweiten belasteten Schaufelkonfiguration, eine Hauptschaufeloberfläche (A, B) einer Schaufel fähig ist, sich in den Kontakt mit der gegenüberliegenden Hauptschaufeloberfläche (A, B) einer benachbarten Schaufel zu krümmen.

10. Felgenloses Fahrzeugrad gemäß einem der vorhergehenden Ansprüche, wobei die Steifigkeit und/oder der Abstand der Schaufeln (12) um die Nabe (10) derart ist, dass, wenn in einer zweiten belasteten Schaufelkonfiguration, eine oder mehrere der ersten und/oder der zweien Hauptschaufeloberflächen (A, B) fähig ist, durch das Ermöglichen eines Grads an relativer Drehung zwischen der Nabe und der äußeren Spitze (16) das Rad auf einer darunterliegenden Oberfläche zu stützen.

11. Felgenloses Fahrzeugrad gemäß Anspruch 10, wobei die Steifigkeit jeder Schaufel (12) derart ist, dass, wenn eine Nabe (10) auf einer ebenen Oberfläche gestützt wird, eine Nabenbelastung von 2,5 kN bewirkt, dass mit der Oberfläche in Kontakt befindliche Schaufelspitzen (16) in Umfangsrichtung um mindestens 10 % der Schaufellänge von dem Fuß (14) zu der Spitze (16) ausgelenkt werden.

12. Felgenloses Fahrzeugrad gemäß einem der vorhergehenden Ansprüche, wobei jede Schaufel (12) auf ihrer ersten und/oder zweiten Hauptschaufeloberfläche (A, B) mit traktionserhöhenden Mitteln (12a) versehen ist.

13. Felgenloses Fahrzeugrad gemäß einem der vorhergehenden Ansprüche, wobei die Nabe (10) mit sechzehn ausgekragten Schaufeln (12) versehen ist.

14. Felgenloses Fahrzeugrad gemäß einem der vorhergehenden Ansprüche, wobei die Nabe (10) und die ausgekragten Schaufeln (12) aus einem Elastomermaterial in einem Stück geformt sind.

15. Ein Passagierfahrzeug, **dadurch gekennzeichnet, dass** es mindestens ein felgenloses Rad gemäß einem der Ansprüche 1 bis 14 beinhaltet.

## Revendications

1. Une roue de véhicule sans jante comprenant :
(i) un moyeu (10) configuré pour être attaché de façon rotative à un véhicule ; et
(ii) une pluralité de pales en porte-à-faux (12) espacées autour du moyeu, chaque pale ayant un pied interne (14) s'étendant à partir du moyeu, un bout externe (16), et des première et deuxième surfaces de pale principales (A, B) qui s'étendent entre le pied et le bout ;
dans laquelle chaque pale a une raideur permettant une flexion indépendante entre une première configuration de pale non chargée et n'importe quel nombre de deuxièmes configurations de pale chargée ; et **caractérisée en ce qu'**une nervure de renfort (15) s'étend de manière circonférentielle entre des pales adjacentes à proximité du moyeu.

2. Une roue de véhicule sans jante selon la revendication 1, dans laquelle lorsqu'elle est dans la première configuration de pale non chargée, chaque pale (12) s'étend de manière substantiellement radiale à partir du moyeu (10), et les première et deuxième surfaces de pale principales (A, B) sont substantiellement planes sur leurs longueurs entre le pied (14) et le bout (16).

3. Une roue de véhicule sans jante selon la revendication 1 ou la revendication 2, dans laquelle lorsqu'elle est dans n'importe lesquelles des deuxièmes configurations de pale chargée, une partie au moins du bout externe (16) de chaque pale (12) est déplacée hors d'alignement radial avec son pied interne (14), et les première et deuxième surfaces de pale principales (A, B) sont courbées sous la charge entre le pied et le bout.

4. Une roue de véhicule sans jante selon n'importe quelle revendication précédente, dans laquelle la longueur de chaque pale (12) du pied (14) au bout (16) fait entre 30 % et 50 % de la circonférence du moyeu (10) mesurée au niveau des pieds internes des pales.

5. Une roue de véhicule sans jante selon n'importe quelle revendication précédente, dans laquelle la profondeur de chaque pale (12) de l'avant à l'arrière dans la direction axiale fait entre 40 % et 60 % de la longueur de chaque pale du pied (14) au bout (16).

6. Une roue de véhicule sans jante selon n'importe quelle revendication précédente, dans laquelle la largeur de chaque pale (12) dans le plan circonférentiel s'effile en direction de son bout externe (16).

7. Une roue de véhicule sans jante selon n'importe quelle revendication précédente, dans laquelle le bout externe (16) de chaque pale (12) est tronqué.

8. Une roue de véhicule sans jante selon n'importe quelle revendication précédente, dans laquelle chaque pale (12) a une raideur qui facilite à la fois un fléchissement circonférentiel et une torsion latérale relativement à la première configuration de pale non chargée.

9. Une roue de véhicule sans jante selon n'importe quelle revendication précédente, dans laquelle chaque pale (12) a une raideur et/ou un espacement de pales autour du moyeu (10) tel que, lorsqu'elle est dans une deuxième configuration de pale chargée, une surface de pale principale (A, B) d'une pale est capable de se courber jusqu'à être au contact de la surface de pale principale opposée (A, B) d'une pale adjacente.

10. Une roue de véhicule sans jante selon n'importe quelle revendication précédente, dans laquelle la raideur et/ou l'espacement des pales (12) autour du moyeu (10) est tel que, lorsqu'elle est dans une deuxième configuration de pale chargée, une ou plusieurs des première et/ou deuxième surfaces de pale principales (A, B) est capable de supporter la roue sur une surface sous-jacente en facilitant un degré de rotation relative entre le moyeu et le bout externe (16).

11. Une roue de véhicule sans jante selon la revendication 10, dans laquelle la raideur de chaque pale (12) est telle que, lorsqu'elle supporte un moyeu (10) sur une surface plane, une charge de moyeu de 2,5 kN amène les bouts de pale (16) au contact de la surface à faire flèche circonférentiellement sur au moins 10 % de la longueur de pale du pied (14) au bout (16).

12. Une roue de véhicule sans jante selon n'importe quelle revendication précédente, dans laquelle chaque pale (12) est pourvue d'un moyen accroissant la traction (12a) sur sa première et/ou deuxième surface de pale principale (A, B).

13. Une roue de véhicule sans jante selon n'importe quelle revendication précédente, dans laquelle le moyeu (10) est pourvu de seize pales en porte-à-faux (12).

14. Une roue de véhicule sans jante selon n'importe quelle revendication précédente, dans laquelle le moyeu (10) et les pales en porte-à-faux (12) sont moulés en une pièce à partir d'un matériau élastomère.

15. Un véhicule à passagers **caractérisé en ce qu'**il comprend au moins une roue sans jante selon n'importe lesquelles des revendications 1 à 14.
